# EUROPEAN PATENT SPECIFICATION

(11) **EP 1 010 331 B1**
(45) Date of publication and mention of the grant of the patent: **09.10.2002**
(21) Application number: 98917011.3
(22) Date of filing: 19.03.1998
(51) Int. Cl.: H04N 7/52

(54) **METHOD OF AND APPARATUS FOR TRANSMITTING DATA FOR INTERACTIVE TV APPLICATIONS**
VERFAHREN UND VORRICHTUNG ZUR DATENÜBERTRAGUNG FÜR INTERAKTIVE FERNSEHANWENDUNGEN
PROCEDE ET DISPOSITIF SERVANT A TRANSMETTRE DES DONNEES POUR DES APPLICATIONS TELEVISUELLES INTERACTIVES

(30) Priority: 21.03.1997 EP 97400650; 25.04.1997 WO PCT/EP97/02110; 12.11.1997 EP 97402702
(43) Date of publication of application: 21.06.2000
(73) Proprietor: Canal+ Technologies, 75015 Paris (FR)
(72) Inventor: DECLERCK, Christophe, F-28210 Senantes (FR); CHAUMET, Christophe, F-78180 Montigny-le-Bretonneux (FR)
(74) Representative: Cozens, Paul Dennis
(86) International application number: EP9801604
(87) International publication number: WO98043437

(56) References cited:
- EP-A- 0 746 119
- WO-A-95/01058
- WO-A-96/25006
- WO-A-96/34466
- WO-A-97/19560
- HIRTZ G ET AL: "OPEN TV: BETRIEBSSYSTEM FUER INTERAKTIVES FERNSEHEN" FERNSEH UND KINOTECHNIK, vol. 50, no. 3, 1 March 1996, pages 84-89, XP000581417
- DROITCOURT J L: "UNDERSTANDING HOW INTERACTIVE TELEVISION SET TOP BOX WORKS... AND WHAT IT WILL MEAN TO THE CUSTOMER" INTERNATIONAL BROADCASTING CONVENTION, vol. 413, 14 September 1995, pages 382-394, XP000562377
- ROTHERMEL K ET AL: "CLOCK HIERARCHIES: AN ABSTRACTION FOR GROUPING AND CONTROLLING MEDIA STREAMS" IEEE JOURNAL ON SELECTED AREAS IN COMMUNICATIONS, vol. 14, no. 1, 1 January 1996, pages 174-184, XP000548820

## Description

This invention relates generally to a method of and apparatus for transmitting data, and more particularly to a method of and apparatus for transmitting data to a receiver/decoder and a transmitting and receiving system.

The advent of digital transmission systems intended primarily for broadcasting television signals, in particular but not exclusively satellite television systems, has opened up the possibility of using such systems for other purposes, such as to provide interactivity with the end user or to provide the end user with additional information.

Hirtz et al "Open TV; Betriebssystem fuer Interaktives Fernsehen", Fernseh und Kinotechnik, vol. 50, no. 3, 1 March 1996, pages 84-89, describe an interactive television system in which a combined information stream consisting of TV programme data and interactive data is transmitted to receiver/decoders. In an example of a teleshopping application, a concert is transmitted in the TV programme and the interactive application displays an icon on the TV screen. By clicking on the icon a menu is opened in which the venues of the next tour are displayed. The viewer can then order tickets for a selected venue using a remote control.

WO95/01058 describes an interactive television system in which a service provider transmits a data stream including a television program listing, together with program titles, program times, categories, channel numbers and the like. While viewing the TV, a viewer may obtain additional information on a current program by depressing an info button on a remote control, and may obtain a program listing of the current programs available for viewing by depressing a list button.

WO97/19560 describes a system for combining real time TV programs with auxiliary data, such as teletext, advertising and the like. Location data for the TV programs and the auxiliary data are added to form a combined data stream and enable a receiver to extract selected portions of the combined data stream in accordance with the location data.

In a first aspect, the present invention provides a method of transmitting data to a receiver/decoder; said method comprising, at first transmitting means, the steps of:
transmitting first type visual and/or audio data to the receiver/decoder; and
transmitting to second transmitting means reference data;
said method being characterised by the step, at the second transmitting means, of:
transmitting in response to particular reference data particular second type data associated with that particular reference data, particular such second type data being associated with particular such first type visual and/or audio data, so that particular first type visual and/or audio data and particular second type data have a predetermined timing relationship, said second type data enabling the receiver/decoder to generate further visual and/or audio data in dependence on the second type data.

The term "receiver/decoder" used herein connotes a receiver for receiving either encoded or non-encoded signals, for example, television and/or radio signals. Embodiments of such receiver/decoders may include a decoder integral with the receiver for decoding the received signals, for example, in a "set-top box" or a such a decoder functioning in combination with a physically separate receiver.

The above method can enable "armchair" shopping by the user.

In a preferred embodiment, second-type data is inserted into the datastream including the visual and/or audio data of, for example, a shopping television programme. The second-type data may include inter alia a product reference, the description and price of the product currently being displayed in the television programme, a representation of the product and the telephone number of a sales system for ordering the product. To purchase the product, the user presses an appropriate button on a remote controller to activate the system and place the receiver/decoder of the datastream in a "shopping mode". The second-type data is extracted from the datastream by the receiver/decoder, which generates further data in dependence on the second-type data and displays the further data on the television screen in the form of an overlay to the television programme. The overlay typically provides an option to the user to purchase the product; by pressing one or more further buttons on the remote controller the user may purchase the product currently being displayed in the television programme.

If the visual and/or audio data and the second-type data were to fall out of synchronisation, it is possible, when the receiver/decoder enters the shopping mode, for the second-type data extracted from the datastream to relate to the next product to be displayed in the television programme. Accordingly, the visual and/or audio data and the second-type data have a prescribed timing relationship, so that the above problem is not encountered.

Preferably, the first type data is visual and audio data which may be displayed on a television set in the form of a television programme. However, the first type data may be audio data only for broadcast by a radio.

The visual and audio data may be associated with any aspect of a television programme. Preferably, this data represents a product (this term herein including a service) advertisement and the second type data are associated with the product being advertised. Other examples include:
- a question asked in a quiz programme;
- a product advertised in an advertisement; and
- any fact or product relating to the subject matter of a television programme, such as a book written by an author or a video of a pop group.

The further visual and/or audio data may be arranged to provide the user with a selectable option, such as an option to purchase a product advertised in a product advertisement.

The respective start times for transmission of the first and second-type data may have the predetermined timing relationship. This can make the timing relationship easy to implement; by adjusting at least one of the times for (i) transmitting the visual and/or audio data, and (ii) transmitting the second-type data, the second-type data can be synchronised with the visual and/or audio data as required. There is no need to adjust any internal clocks in the transmitting system.

Preferably, the first and second times are the same. The second-type data can be synchronised with at least part of a television programme so that it is generated only whilst that part of the television programme is to be transmitted, for example, during a question in a quiz programme or during the advertisement of a particular product in a shopping programme.

Alternatively, the broadcast supplier may wish to have a fixed delay, for example, of several seconds, between providing the video and audio signals and commencing the generation of the data associated with the television programme so that the data associated with a television programme can remain available to a user after the end of that part of the programme.

Preferably, the method is further a method of receiving said data, further comprising receiving the first and second type data at the receiver/decoder, and generating the further visual and/or audio data in dependence on the second-type data.

Two clock signals may be provided, the first and second type data being transmitted at times determined by respective ones of the clock signals, the two clock signals being compared, and at least one of the times being adjusted according to the result of the comparison.

By comparing the two clock signals which determine the actual times when the first and second times occur and adjusting (delaying or advancing) at least one of the first and second times as necessary, the first and second type data can be easily synchronised.

At least one of the clock signals may form part of its respective type data.

The first type data may be transmitted at a plurality of times, and a playlist of the times at which the data are to be transmitted may be generated. The playlist may be generated periodically.

In one preferred embodiment, the second type data is transmitted in dependence on the times of the playlist and the times on the playlist are adjusted according to the result of the comparison.

The further visual and/or audio data is preferably generated by the receiver/decoder using directly the second type data upon receipt of a generation command from a user of the receiver/decoder. Hence, the second type data is transmitted preferably synchronously with the first type data can enable the receiver/decoder directly to generate further visual and/or audio data immediately upon request by the user of the receiver/decoder.

Preferably, the second type data is multiplexed with the first type data for simultaneous transmission with the first type data. Alternatively, the second type data may be transmitted in the blanking interval of the first type data. The first type data may represent a product advertisement and second type data may comprise an identifier of the product.

In a related aspect, the present invention provides apparatus for transmitting data to a receiver/decoder; said apparatus comprising:
first transmitting means for transmitting first type visual and/or audio data to the receiver/decoder; and
second transmitting means for transmitting second type data, particular such second type data being associated with particular such first type visual and/or audio data, to enable the receiver/decoder to generate further visual and/or audio data in dependence on the second type data;
characterised in that the first transmitting means is arranged to transmit to the second transmitting means reference data in response to which said second transmitting means is arranged to transmit said second type data so that said particular first type visual and/or audio data and particular second type data have a predetermined timing relationship, particular such second type data being transmitted in response to particular such reference data associated with that second type data.

The respective start times for transmission of the first and second type data may have the predetermined timing relationship.

The respective start times may be the same.

The first type data may represent a product advertisement and the second type data may be associated with the product being advertised.

The apparatus may further comprise:
means for providing two clock signals, the first and second transmitting means being arranged to transmit the first type visual and/or audio data and the second type data at times determined by respective ones of the clock signals;
means for comparing the two clock signals; and
means for adjusting at least one of the times according to the result of the comparison.

Preferably at least one of the clock signals forms part of its respective type data.

The first transmitting means may be arranged such that the first type data are transmitted at a plurality of times, and may further comprise means for generating a playlist of the times at which the first type data are to be transmitted.

The adjusting means may be arranged to adjust the times on the playlist according to the result of the comparison.

The second transmitting means may comprise means for extracting the reference data from the blanking interval of the first type visual and/or audio data.

In another related aspect, the present invention provides a transmitting and receiving system, comprising apparatus for transmitting data as set forth above and a receiver/decoder comprising means for receiving the first and second type data, and means for generating the further visual and/or audio data in dependence on the reference data.

Method features described herein may be applied to apparatus aspects of the invention, and vice versa. Likewise, features of one aspect of the invention may be applied to any aspect.

Preferred features of the present invention will now be described, purely by way of example, with reference to the accompanying drawings, in which:-
- Figure 1: shows the overall architecture of a digital television system;
- Figure 2: shows the architecture of an interactive system of the digital television system of Figure 1;
- Figure 3: is a schematic diagram of interfaces of a receiver/decoder forming part of the system of figures 1 and 2;
- Figure 4: is a schematic diagram of a remote controller used in the digital television system;
- Figure 5: shows the arrangement of files within a module downloaded into the memory of an interactive receiver/decoder;
- Figure 6: shows the overall architecture of an embodiment of the system when in its shopping mode;
- Figure 7: shows an example of various components of the MPEG-2 bitstream used in the shopping mode;
- Figure 8: shows the overall architecture of an embodiment of the synchronisation system; and
- Figure 9: shows the overall architecture of another embodiment of the synchronisation system;
- Figure 9A: shows the overall architecture of yet another embodiment of the synchronisation system;
- Figure 10: is a first part of a flow diagram illustrating an example of the operation of the system of figure 6;
- Figure 11: illustrates an example of a screen of the television set of the system of figure 6; and
- Figure 12: is a second part of the flow diagram shown partially in figure 10.

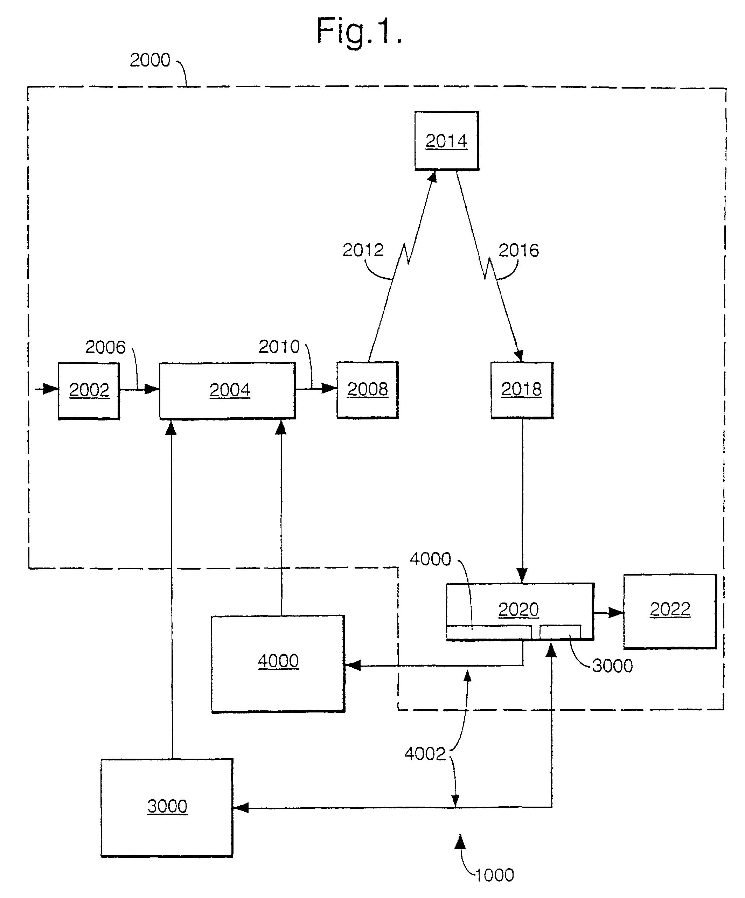

An overview of a digital television system 1000 is shown in Figure 1. The system includes a mostly conventional digital television system 2000 which uses the known MPEG-2 compression system to transmit compressed digital signals. In more detail, MPEG-2 compressor 2002 in a broadcast centre receives a digital signal stream (typically a stream of video signals). The compressor 2002 is connected to a multiplexer and scrambler 2004 by linkage 2006. The multiplexer 2004 receives a plurality of further input signals, assembles one or more transport streams and transmits compressed digital signals to a transmitter 2008 of the broadcast centre via linkage 2010, which can of course take a wide variety of forms including telecommunications links. The transmitter 2008 transmits electromagnetic signals via uplink 2012 towards a satellite transponder 2014, where they are electronically processed and broadcast via notional downlink 2016 to earth receiver 2018, conventionally in the form of a dish owned or rented by the end user. The signals received by receiver 2018 are transmitted to an integrated receiver/decoder 2020 owned or rented by the end user and connected to the end user's television set 2022. The receiver/decoder 2020 decodes the compressed MPEG-2 signal into a television signal for the television set 2022.

A conditional access system 3000 is connected to the multiplexer 2004 and the receiver/decoder 2020, and is located partly in the broadcast centre and partly in the decoder. It enables the end user to access digital television broadcasts from one or more broadcast suppliers. A smartcard, capable of deciphering messages relating to commercial offers (that is, one or several television programmes sold by the broadcast supplier), can be inserted into the receiver/decoder 2020. Using the decoder 2020 and smartcard, the end user may purchase commercial offers in either a subscription mode or a pay-per-view mode.

An interactive system 4000, also connected to the multiplexer 2004 and the receiver/decoder 2020 and again located partly in the broadcast centre and partly in the decoder, enables the end user to interact with various applications via a modemmed back channel 4002.

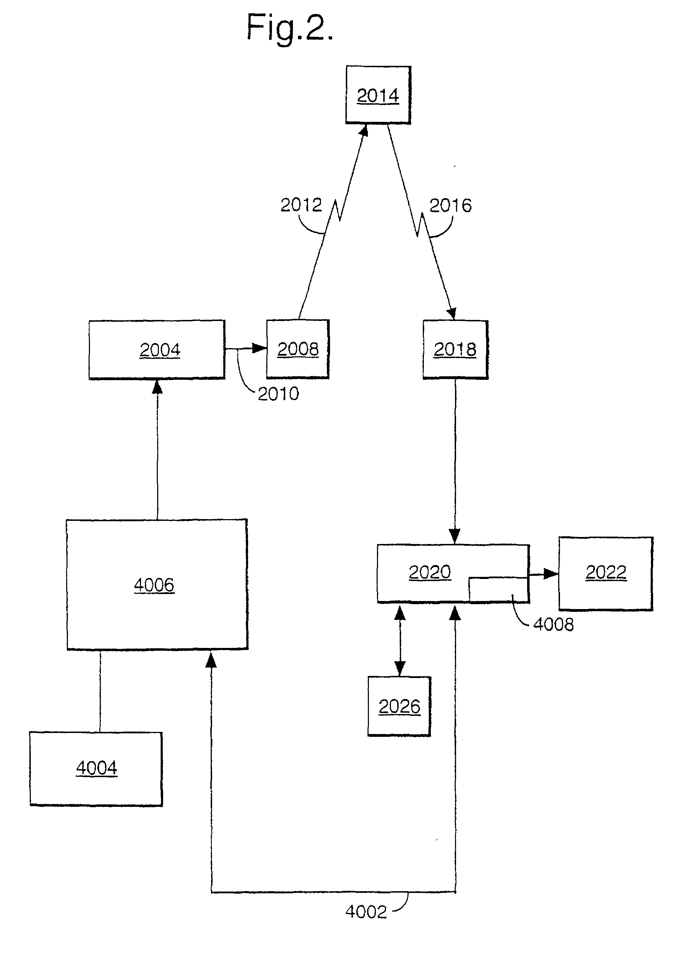

Figure 2 shows the general architecture of the interactive system 4000 of the digital television system 1000 of the present invention.

For example, the interacting system 4000 allows an end user to buy items from on-screen catalogues, consult local news and weather maps on demand and play games through their television set.

The interactive system 4000 comprises in overview four main elements:-
- an authoring tool 4004 at the broadcast centre or elsewhere for enabling a broadcast supplier to create, develop, debug and test applications;
- an application and data server 4006, at the broadcast centre, connected to the authoring tool 4004 for enabling a broadcast supplier to prepare, authenticate and format applications and data for delivery to the multiplexer and scrambler 2004 for insertion into the MPEG-2 transport stream (typically the private section thereof) to be broadcast to the end user;
- a virtual machine including a run time engine (RTE) 4008, which is an executable code installed in the receiver/decoder 2020 owned or rented by the end user for enabling an end user to receive, authenticate, decompress, and load applications into the working memory of the decoder 2020 for execution. The engine 4008 also runs resident, general-purpose applications. The engine 4008 is independent of the hardware and operating system; and
- a modemmed back channel 4002 between the receiver/decoder 2020 and the application and data server 4006 to enable signals instructing the server 4006 to insert data and applications into the MPEG-2 transport stream at the request of the end user.

The interactive system operates using "applications" which control the functions of the receiver/decoder and various devices contained therein. Applications are represented in the engine 4008 as "resource files". A "module" is a set of resource files and data. A "memory volume" of the receiver/decoder is a storage space for modules. Modules may be downloaded into the receiver/decoder 2020 from the MPEG-2 transport stream.

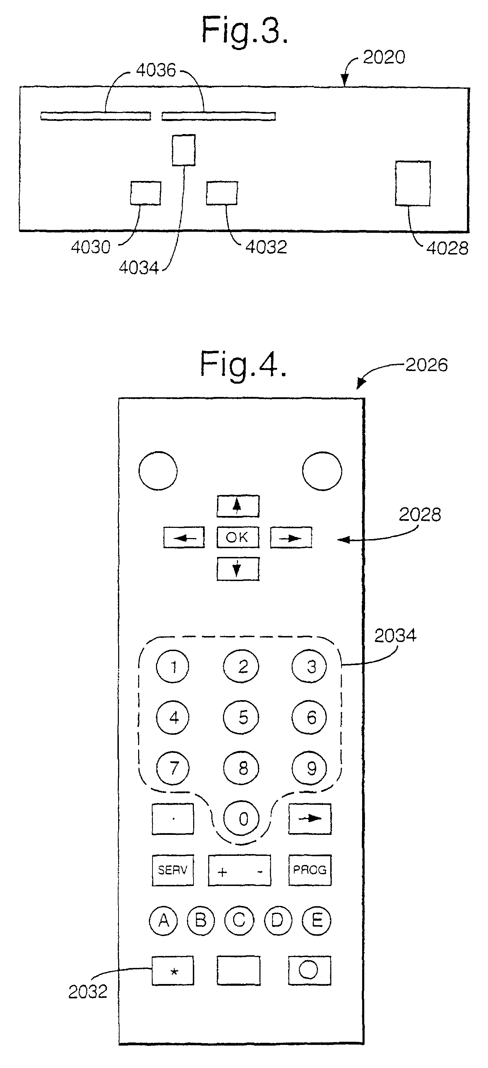

Physical interfaces of the receiver/decoder 2020 arc used for downloading data. With reference to Figure 3, the decoder 2020 contains, for example, six downloading devices; MPEG flow tuner 4028, serial interface 4030, parallel interface 4032, modem 4034 and two card readers 4036.

Modem 4034 of the receiver/decoder 2020, or alternatively an external modem, such as a V34 modem capable of transferring data at up to 28.8 kbytes per second, connected to the serial interface, is connected via a telephone line to the application and data server 4006, or alternatively to a separate sales system the telephone number of which has been downloaded to the receiver/decoder 2020.

For the purposes of this specification, an application is a piece of computer code for controlling high level functions of preferably the receiver/decoder 2020. For example, when the end user positions the focus of a remote controller 2026 (as shown in more detail in figure 4) on a button object seen on the screen of the television set 2022 and presses the validation key, the instruction sequence associated with the button is run.

An interactive application proposes menus and executes commands at the request of the end user and provides data related to the purpose of the application. Applications may be either resident applications, that is, stored in the ROM (or FLASH or other non-volatile memory) of the receiver/decoder 2020, or broadcast and downloaded into the RAM (or FLASH) of the receiver/decoder 2020 by extracting the application code from the digital datastream.

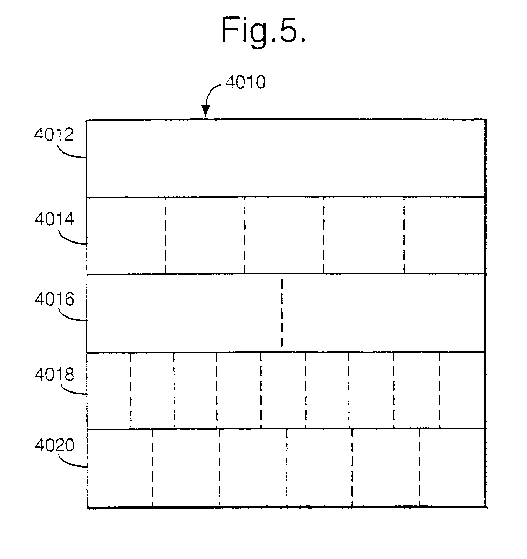

Applications are stored in memory locations in the receiver/decoder 2020 and represented as resource files and data. The resource files comprise graphic object description unit files, variables block unit files, instruction sequence files and application files. With reference to Figure 5, a module 4010, such as a shopping module, is a set of resource files and data comprising the following:
a single application file 4012;
an undetermined number of graphic object description unit files 4014;
an undetermined number of variables block unit files 4016;
an undetermined number of instruction sequence files 4018; and
where appropriate, data files 4020 such as icon library files, image files,
character font files, colour table files and ASCII text files.

The graphic object description unit files describe the screens, the man-machine interface of the application. The variables block unit files describe the data structures handled by the application. The instruction sequence files describe the processing operations of the applications. The application files provide the entry points for the applications.

The applications constituted in this way can use data files, such as the icon library files, image files, character font files, colour table files and ASCII text files. An interactive application can also obtain on-line data by effecting inputs and/or outputs.

The engine 4008 only loads into its memory those resource files it needs at a given time. These resource files are read from the graphic object description unit files, instruction sequence files and application files; variables block unit files are stored in memory following a call to a procedure for loading modules and remain locked there until a specific call to a procedure for unloading modules is made.

A shopping mode of operation of the interactive system will now be described.

A shopping application enables "armchair" shopping by the end user. Offers of goods (or services or other products) for sale are displayed on the television set 2022 via visual and/or audio data downloaded by the receiver/decoder 2020. Goods may be purchased by means of a purchase order input to the receiver/decoder 2020 by the end user.

In operation, first assume that the receiver/decoder 2020 is operating in a "television mode", that is, extracting visual and/or audio data from the datastream and supplying the extracted data to the television set 2022 for display to the end user. By pressing a button on the remote controller 2026, the end user is able to activate the shopping application, placing the receiver/decoder 2020 in a "shopping mode". When the receiver/decoder 2020 has been placed in the shopping mode, the application enables reference data included in the datastream to be extracted therefrom by the receiver/decoder 2020 for the display of further data in the form of shopping data on the screen of the television set 2022.

Offers of goods for sale are displayed on the television set 2022 via the visual and/or audio data being broadcast by a broadcast supplier (for example, a television programme broadcast on a "shopping channel" of a broadcast supplier) and being downloaded by the receiver/decoder 2020. For example, the shopping data may comprise a series of commands which cause the simultaneous display on the television screen of the television programme and an overlay, typically comprising one or more button objects in the form of icons, representing the goods currently being shown in the television programme and the purchase price.

As described later, reference data included in the MPEG bitstream is synchronised with the visual and/or audio data contained therein so that, as the goods shown in the television programme vary, the shopping data displayed on the screen varies so that the overlay is updated to represent those goods currently shown in the television programme. If the video and/or audio data and the reference data fall out of synchronisation, it is possible, when the receiver/decoder enters the shopping mode, for the reference data extracted from the datastream to relate to the next product to be displayed in the television programme.

The end user can, by pressing appropriate buttons on the remote controller 2026, focus on any desired button object of the overlay and can select that object in order to purchase one of the goods displayed in the television programme. This purchase order is received by the receiver/decoder 2020, which runs a program stored in the receiver/decoder 2020 to dial the application and data server 4006 or the separate sales system using the modem 4034. Whilst communication between the receiver/decoder 2020 and, for example, server 4006 is being established, the overlay is changed so that a message, typically in the form of an icon or an animated cartoon, is displayed on the television set 2022. Additionally, in response to a purchase order for particular goods, the application may cause the icon representative of those goods to change.

Once communication has been established, the receiver/decoder 2020 outputs this purchase order to the server 4006 via the modem. The server 4006 receives and processes this order, for example, with an order to debit the account for a credit card which has been inserted into one of the card readers 4036 of the receiver/decoder 2020.

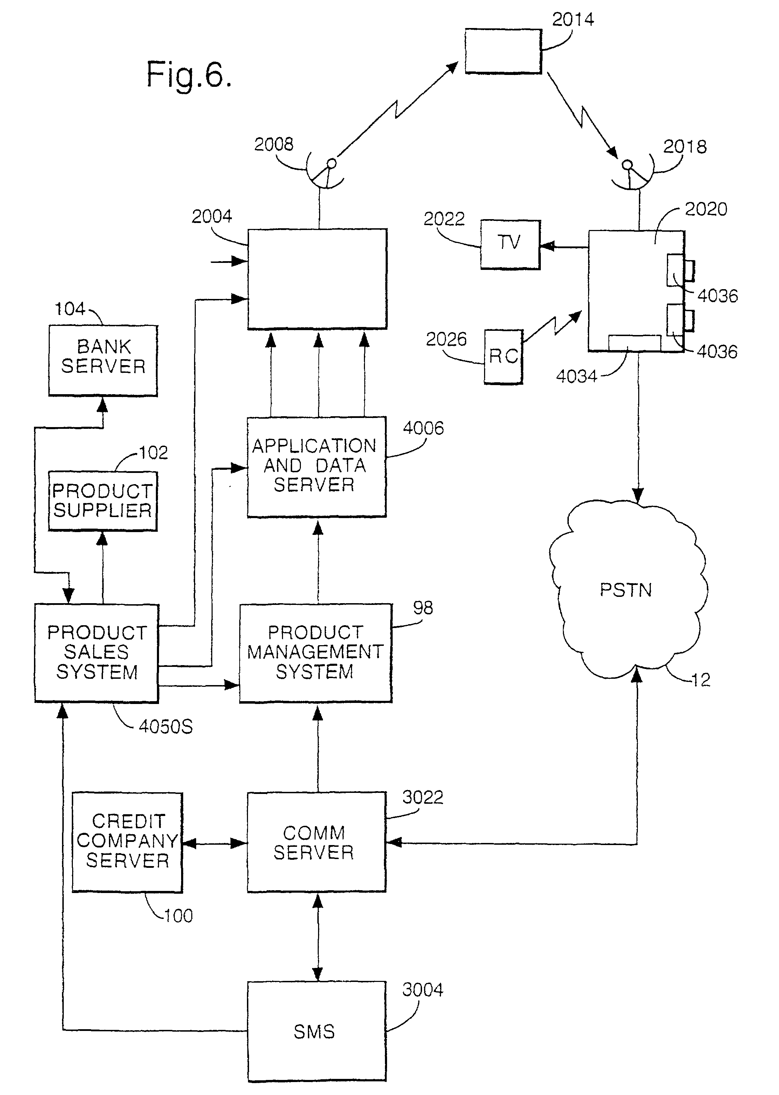

With reference to figure 6, the receiver/decoder 2020 is connectable via a public switched telephone network ("PSTN") 12 to the communications server 3022. The communications server 3022 is connectable to a subscriber management system ("SMS") 3004 and to a product management system 98 and a credit company server 100. The SMS 3004 is connectable to a product sales system 4050S, which in turn is connectable to the product management system 98, the application and data sever 4006, the multiplexer and scrambler 2004, a product supplier 102 and a bank server 104. The product management system 98 is also connectable to the application and data server.

The connection of the product sales system 4050S to the multiplexer and scrambler 2004 enables visual and/or audio data, such as a shopping television programme, to be supplied by the product sales system and integrated into the broadcast datastream.

The connection of the product sales system 4050S to the application and data server 4006 enables a playlist to be supplied from the system 4050S to the server 4006. For example, with respect to products to be advertised in a number of shopping television programmes, the playlist comprises a list of product references for the products to be advertised and the respective start times at which the programmes are to commence.

The playlist can also include date information.

The playlist may relate to any number of products to be advertised over any period of time, and the product references may be in any suitable form. For instance, the playlist may comprise a list of products that are to be advertised for the period of 15 minutes starting at 10.00 a.m., as follows:

| | |
|---|---|
| 10.00 | 3854 |
| 10.03 | 0159 |
| 10.08 | 5987 |
| 10.12 | 2258 |

The playlist is continuously updated, and is transmitted from the system 4050S in advance of the first start time referred to therein, typically 24 hours or so beforehand.

The connection of the product sales system 4050S to the product management system 98 enables catalogue data to be supplied. The catalogue data typically includes, for each product, product data including the product reference, a title of the product, a description of the product, the price of the product and an ID for a picture of the product. The catalogue data is stored in the form of a look-up table of the product management system 98, and may be updated on a regular basis, for example, on a daily basis.

The connection of the application and data server 4006 to the multiplexer and scrambler 2004 enables:
(1) the shopping application to be transmitted to the receiver/decoder 2020;
(2) the catalogue data, in the form of a look-up table, to be transmitted to the receiver/decoder; and
(3) product data to be transmitted to the receiver/decoder 2020 in dependence with a product reference transmitted from the system 4050S.

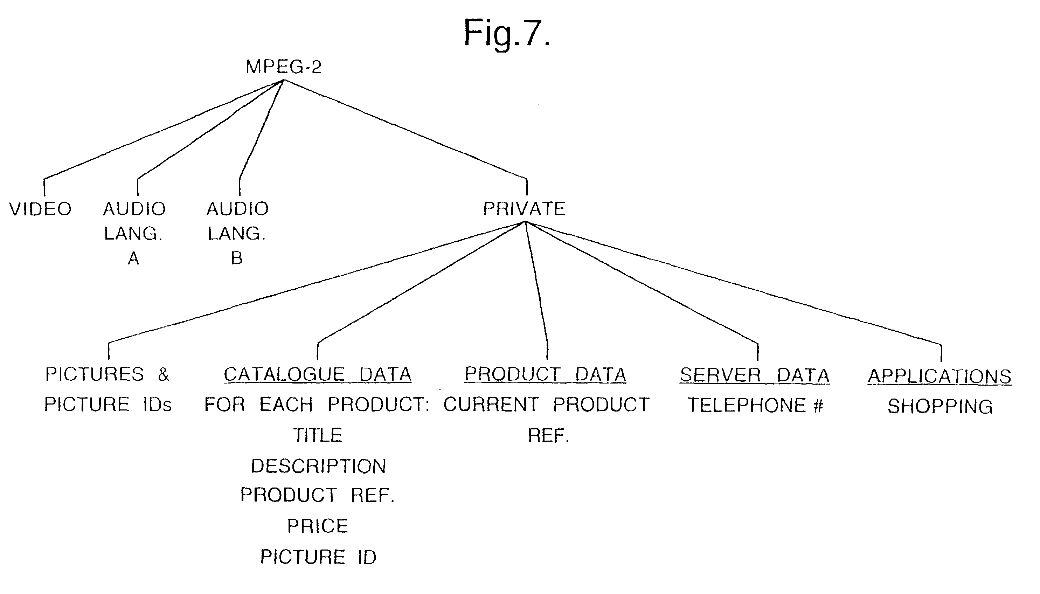

Referring now to figure 7, the above may be included, independently or in any appropriate combination, in a private section of an MPEG-2 bitstream, which may also include the telephone number of the communications server 3022, and pictures and picture IDs of the products.

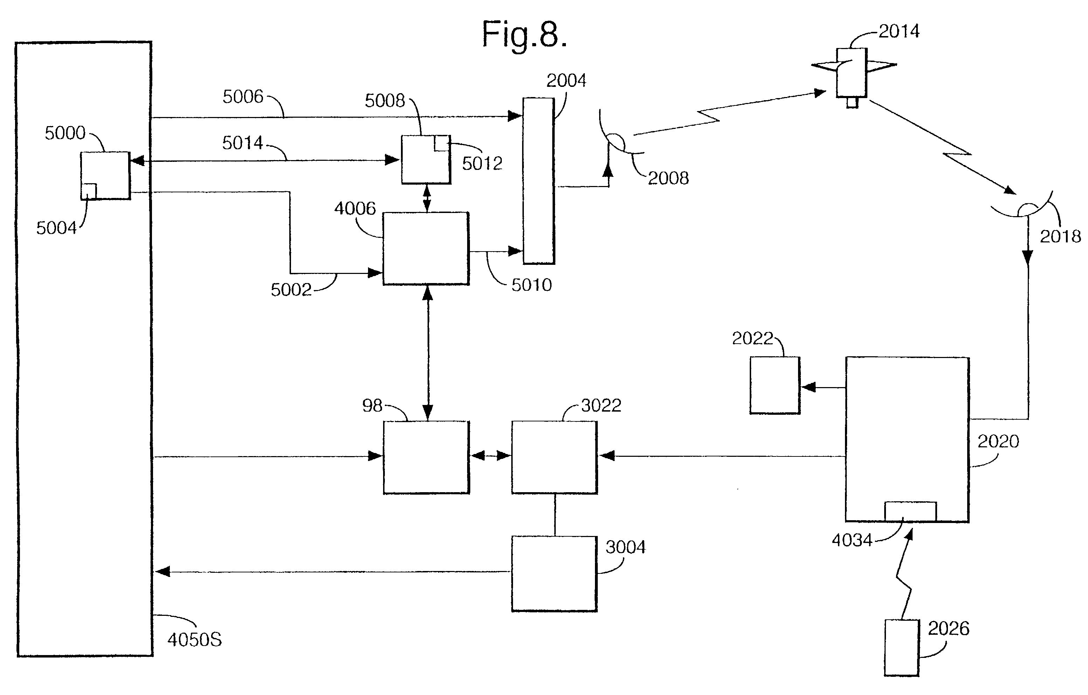

A first embodiment of a system for synchronising reference data included in a datastream with visual and/or audio data contained therein will now be described with reference to figure 8.

The product sales system 4050S includes a controller 5000, typically in the form of a personal computer. The controller 5000 is connected to the application and data server 4006 by linkage 5002 and controls the transmission of the playlist from the product sales system 4050S to the application and data server 4006. The controller 5000 includes an internal clock 5004.

The product sales system 4050S is connected to the multiplexer and scrambler 2004 by linkage 5006 which enables visual and/or audio data and typically also pictures of the products to be supplied by the product sales system and integrated into the broadcast datastream. For each visual and/or audio data associated with a product reference listed in the playlist, the product sales system 4050S commences the transmission of the visual and/or audio data at the time indicated in the playlist and as determined from the internal clock 5004.

The application and data server 4006 includes a controller 5008 for controlling the generation of typically an MPEG section containing the product data of the product currently the subject of the visual and/or audio data supplied by the product sales system 4050S to the multiplexer 2004 via linkage 5010. The product data is read from the look-up table in the product management system 98 in response to the product reference contained in the playlist. The MPEG section typically includes, as the product data, the title, description and price of that product, together with a picture ID for the picture showing the product. The controller 5008 includes an internal clock 5012, and repeatedly transmits the MPEG section, typically with a period between 200 ms and 5 seconds, to the multiplexer and scrambler 2004 from the time indicated in the received playlist and as determined by the internal clock 5012.

The multiplexer and scrambler 2004 receives the MPEG section and multiplexes the MPEG datastream comprising video and/or audio MPEG sections received from the system 4050S with that MPEG section and transmits the multiplexed datastream to the transmitter 2008. The transmitter 2008 transmits electromagnetic signals to transponder 2014 which are subsequently received by receiver 2018 and transmitted to the receiver/decoder 2020. The receiver/decoder 2020 decodes the video and/or audio MPEG sections from the received datastream into a television signal for television set 2022.

By pressing a button on the remote controller 2026, the end user is able to download (if necessary) and activate the shopping application, placing the receiver/decoder 2020 in a "shopping mode". When the receiver/decoder 2020 has been placed in the shopping mode, the shopping application enables the product data, included in the private section of the MPEG bitstream, to be extracted therefrom by the receiver/decoder 2020 for the display of shopping data on the screen of the television set 2022 in the form of an overlay, typically comprising one or more button objects in the form of icons representing the goods currently being shown in the television programme and the purchase price.

If the internal clock 5012 of the controller 5008 is synchronised with the internal clock 5004 of the controller, the product data extracted from the datastream at any time during the broadcast of visual and/or audio data will relate to that data. However, if the internal clock 5012 of the controller 5008 is not synchronised with the internal clock 5004 of the controller 5000, then the product data extracted from the datastream at any time during the broadcast of visual and/or audio data such as a shopping television programme or a question in a quiz programme may relate to such data yet to be transmitted.

In order to compensate for any time difference between the clocks 5004 and 5012, the controller 5000 of the product sales system 4050S is connected to the controller 5008 of the application and data server 406 by linkage 5014. The controller 5008 of the application and data server 4006 receives via linkage 5014 a clock signal output from the internal clock 5004 of the product sales system 4050S. Alternatively, the clock signal may be included in the blanking section of the datastream output from the product sales system 4050S and extracted therefrom by the controller 5008. This clock signal may be output continuously or at prescribed intervals by the product sales system 4050S, or may be output in response to a request received from the controller 5008 via linkage 5014.

The controller 5008 compares the received clock signal with a clock signal generated by its own internal clock 5012. If there is a time difference between the two signals, the controller adds or subtracts, as the case may be, the time difference to the start times listed in the received playlist so that the product data is transmitted synchronously with the visual and/or audio data.

By way of example, a playlist includes product reference "3854" for a video of the film "Casablanca" to be advertised between 10.00 and 10.03 on a television shopping channel. If the clock signal received from the product sales system 4050S indicates that the time is 9.57.00, and the clock signal generated by its own internal clock 5012 indicates that the time is 10.00.00, the controller 5008 adds 3 minutes to the start times listed in the playlist. This effectively advances the transmittal of the product data by the application and data server 4006 to the multiplexer and scrambler 2004 by 3 minutes in order to synchronise the product data for the video of "Casablanca" with the visual and/or audio data of the advertisement.

In a second embodiment (not illustrated), the controller 5000 of the product sales system 4050S receives via linkage 5014 a clock signal output from the internal clock 5012 of the controller 5008. This clock signal may be output continuously or at prescribed intervals by the controller 5008, or may be output in response to a request received from the controller 5000 via linkage 5014. The controller 5000 compares the received clock signal with a clock signal generated by its own internal clock 5004. If there is a time difference between the two signals, the controller adds or subtracts, as the case may be, the time difference to the times at which the visual and/or audio data is to be transmitted. In other words, the controller 5000 may delay or advance the transmittal of the visual and/or audio data to the multiplexer 2004. In the above example, if the clock signal received from the internal clock 5012 indicates that the time is 10.00.00, and the clock signal generated by its own internal clock 5004 indicates that the time is 9.57.00, the controller 5000 subtracts 3 minutes from the time at which the visual and/or audio data for the advertisement of the video for "Casablanca" is to be transmitted. This synchronises the product data for the video of "Casablanca" with the visual and/or audio data of the advertisement.

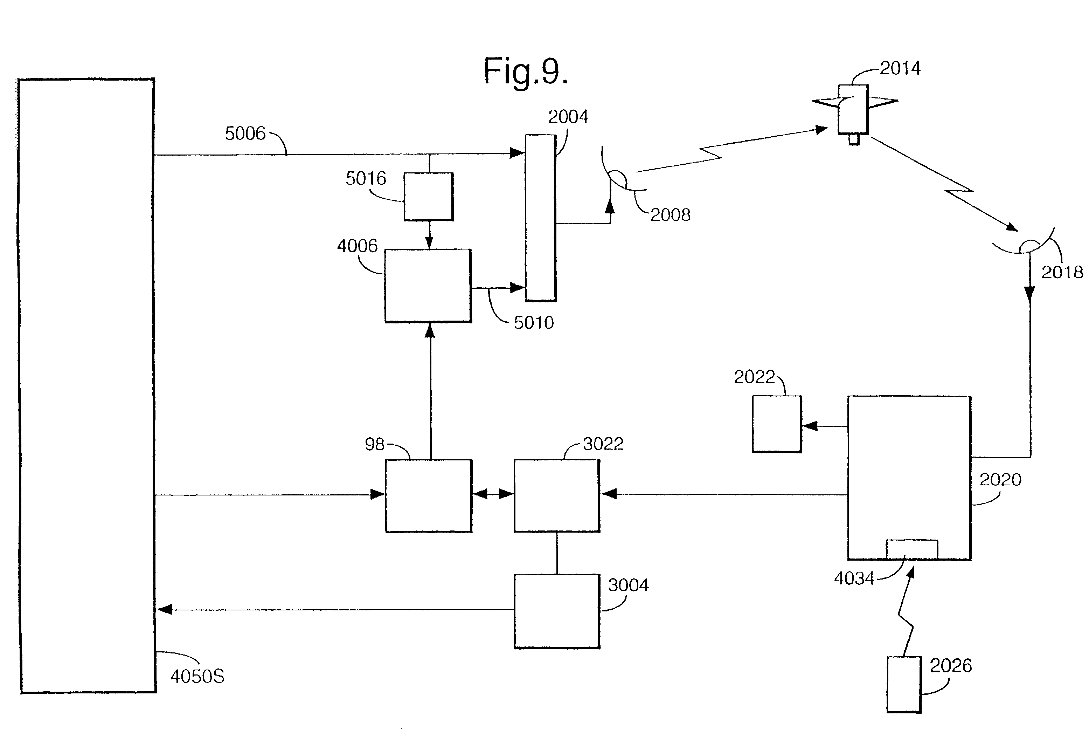

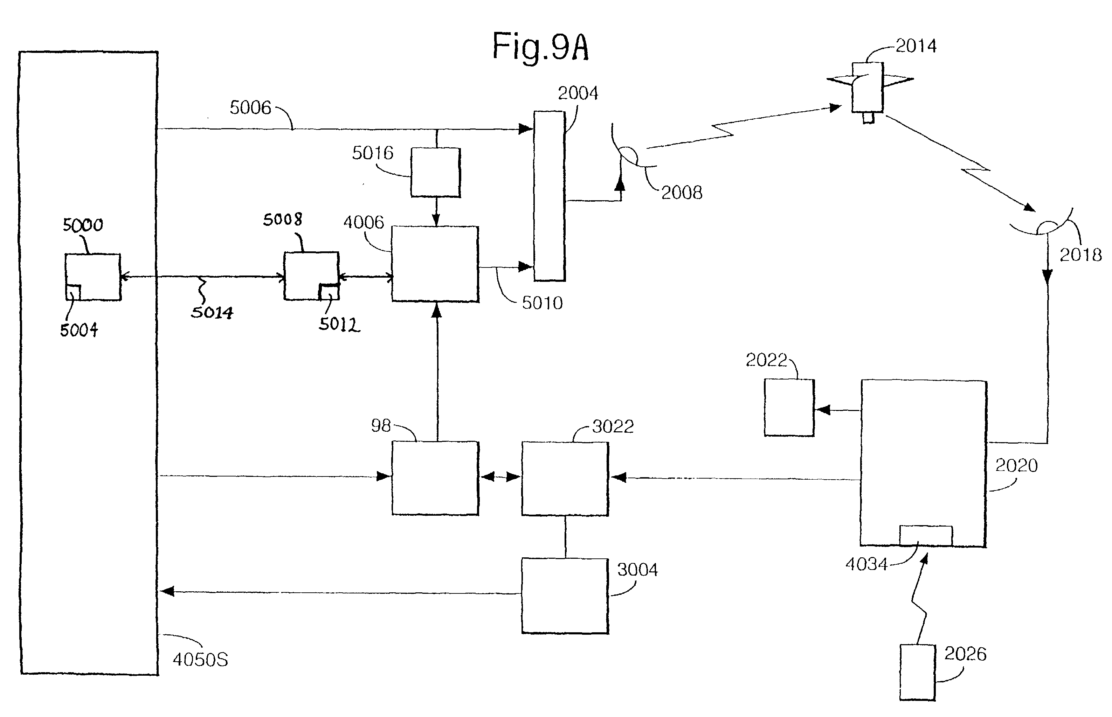

Figure 9 illustrates a third embodiment of the system for synchronising data included in a datastream with visual and/or audio data contained therein.

In this embodiment, the product reference of the product to be advertised in the visual and/or audio data is inserted into the video blanking section of the data generated by the product sales system 4050S. Within the time period in which a particular product is to be advertised, the product reference may be repeatedly inserted into the blanking section with a period typically from 200ms to 5 seconds.

The visual and/or audio data is transmitted to the multiplexer 2004. The application and data server 4006 includes a data extractor 5016 for extracting the product reference from the video sequence. Similar to the first and second embodiments, product data is read from the look-up table in the product management system 98 in response to the product reference contained in the video blanking section and an MPEG section is generated, typically including the title, description and price of that product, together with a picture ID for the picture showing the product. The thus generated MPEG section is transmitted to the multiplexer and scrambler 2004 via linkage 5010 for reception synchronously with the visual and/or audio data.

This third embodiment has the advantage over the first and second embodiments described above of not requiring controller 5000, controller 5008 or the generation of a playlist.

In a fourth embodiment (not illustrated), the look-up table in the product management system 98 is transmitted to the application and data server 4006 for subsequent transmittal by the transmitter 2008 to the receiver/decoder 2020. The transmitted look-up table is stored in the receiver/decoder 2020. As the look-up table in the product management system is updated, the updated look-up table is transmitted to the server 4006 for transmittal to the receiver/decoder 2020, wherein the previously received look-up table is replaced by the received, updated look-up table.

Similarly to the third embodiment, the product reference of the product to be advertised in visual and/or audio data is inserted into the video blanking section of the data generated by the product sales system 4050S. Within the time period in which a particular product is to be advertised, the product reference may be repeatedly inserted into the blanking section with a period typically from 200ms to 5 seconds.

A data extractor, similar to data extractor 3016, is included in the receiver/decoder 2020. When the receiver/decoder 2020 enters the "shopping mode" in response to a signal received for the remote controller 2026, the product reference is extracted from the received datastream. From the product reference, the corresponding product data is read from the look-up table in the receiver/decoder 2020 and shopping data in the form of an overlay representing the product data is displayed on the screen of the television, as described above.

Figure 9A illustrates a fifth embodiment of the system for synchronising data included in a datastream with visual and/or audio data contained therein.

Similarly to the third embodiment, the product reference to the product to be advertised in the visual and/or audio data is inserted into the video blanking section of the data generated by the product sales system 4050S. In this fifth embodiment, the video blanking section also includes an indicator of the time at which the MPEG section is to be generated by the application and data server 4006. This time indicator is extracted from the video blanking section, together with the product reference, by the extractor 3016.

As shown in Figure 9A, the system includes, similarly to the first and second embodiments, controller 5000 with internal clock 5004, controller 5008 with internal clock 5012, and linkage 5014 between the two. The controller 5008 of the application and data server 4006 receives via linkage 5014 a clock signal output from the internal clock 5004 of the product sales system 4050S. This clock signal may be output continuously or at prescribed intervals by the product sales system, or may be output in response to a request received from the controller via linkage 5014.

The controller 5008 compares the received clock signal with a clock signal generated by its own internal clock 5012. If there is a time difference between the two signals, the controller adds or subtracts, as the case may be, the time difference to the time indicator extracted from the video blanking section by the data extractor 5016, so that the MPEG section is generated by the application and data server and transmitted synchronously with the visual and/or audio data.

This fifth embodiment has the advantage over the first and second embodiments described above of not requiring the generation of a playlist.

In all of the above embodiments, the shopping data is displayed on the screen of the television as soon as the receiver/decoder enters the "shopping mode" in response to a signal received from the remote controller. This is because data required to generate directly the shopping data (the required data being in the form of either an MPEG section multiplexed with the visual and/or audio data or a product reference contained in the video blanking section of the video and/or audio data) is transmitted synchronously with the video and/or audio data.

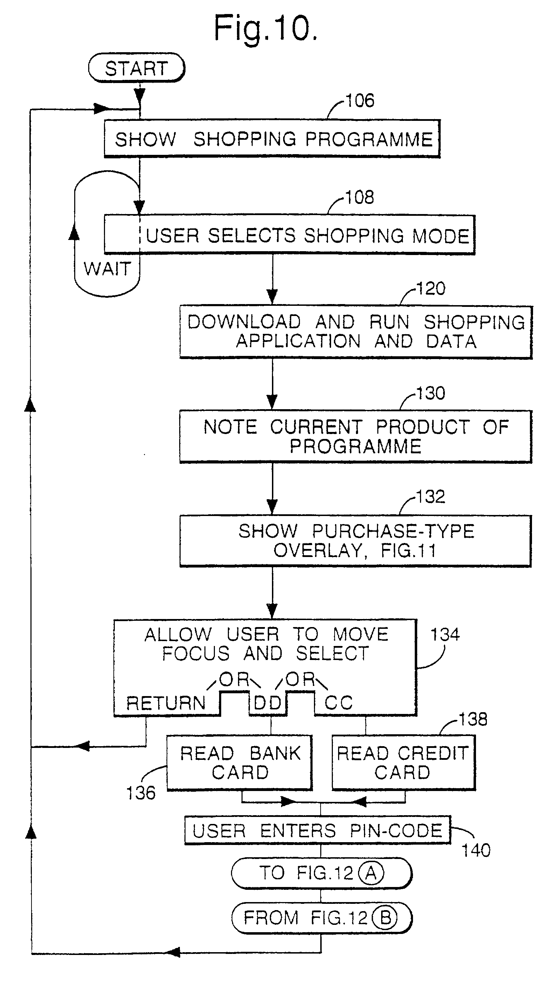

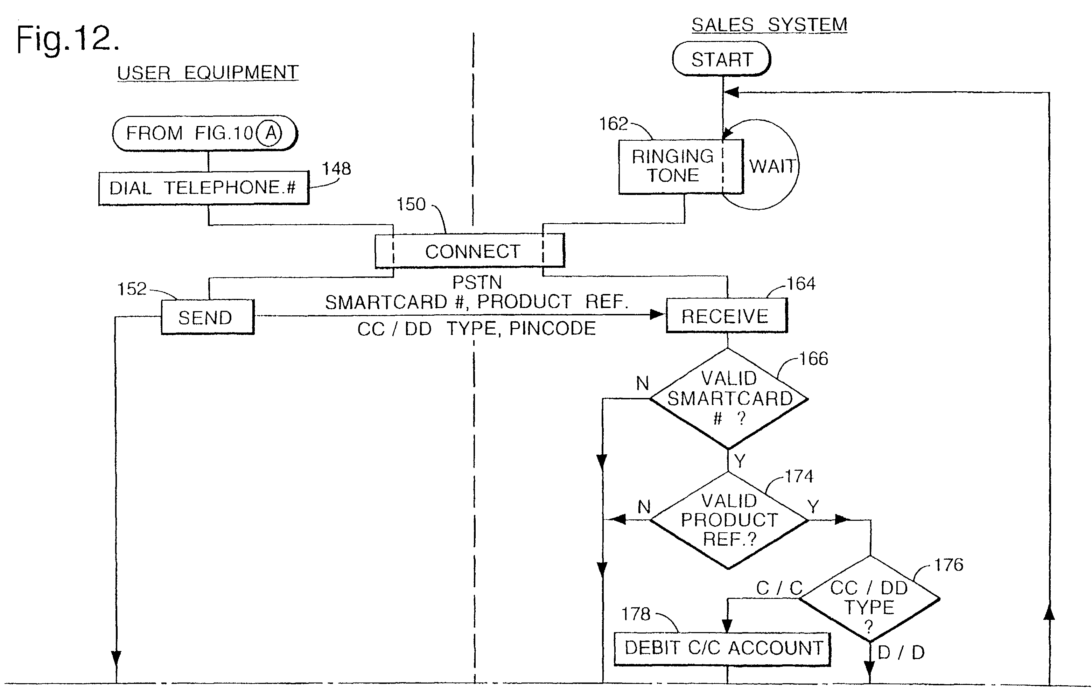

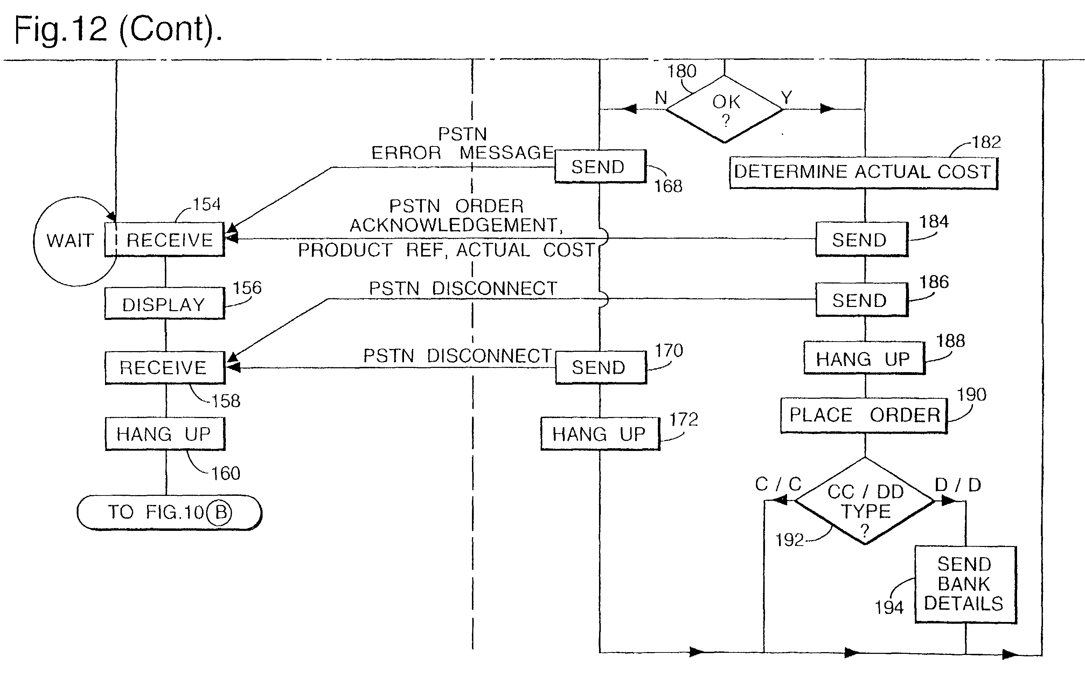

The operation of the system in the shopping mode in all of the above embodiments will now be described with reference to figures 10 to 12. Figure 10 is a flow diagram illustrating operation of the receiver/decoder 2020, whereas figure 12 is a flow diagram which, on the left side, illustrates operation of the receiver/decoder 2020 and, on the right side, illustrates operation of the remainder of the system.

Referring to Figure 10, the shopping programme is shown on the television set in step 106. When the shopping mode is selected in step 108 the receiver/decoder 2020 downloads (if necessary) and runs the shopping application and downloads the reference data associated with the product advertised in the television programme in step 120. As described later, this data may be the product reference only or the product data generated using the product reference.

The remaining steps taken by the receiver/decoder 2020 in figures 10 and 12 are caused to occur by the downloaded shopping application. When the user presses one or more appropriate buttons on the remote controller, in step 130 the receiver/decoder 2020 notes the reference data of the product which is currently being advertised in the shopping television programme from the received data.

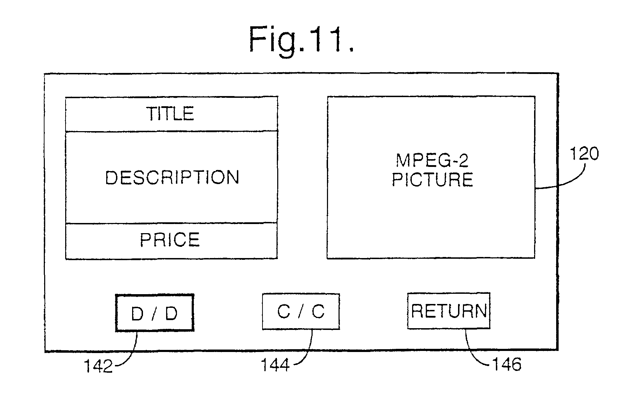

After step 130, in step 132 the receiver/decoder 2020 causes the television 2022 to display a purchase-type overlay as shown in figure 11.

The upper right portion of the overlay typically displays a picture 120 of the product. The upper left portion of the overlay typically displays the title, description and price of the product. The lower portion of the screen includes a "D/D" button 142 to select a purchase with payment by direct debit from a bank account, a "C/C" button 144 to select a purchase with payment using a credit card account, and a button 146 to cancel the purchase operation. One of the buttons has initial focus, which is shown by an emboldened border around that button, and the focus can be changed by pressing the left arrow button or the right arrow button of the remote controller 2026. The currently focused button can then be selected by pressing the "OK" button of the remote controller 2026. In step 134, if the OK button is pressed with the return button in focus, then the process returns to step 108, in which the normal shopping screen of figure 9 is displayed. If the OK button is pressed with the D/D button 142 in focus, then in step 136 the receiver/decoder 2020 reads data from a bank card inserted in one of the card readers 4036 of the receiver/decoder 2020. On the other hand, if the OK button is pressed with the C/C button 144 in focus, then in step 138 the receiver/decoder 2020 reads data from a credit card inserted in one of the card readers 4036 of the receiver/decoder 2020. These processes may include further steps, not shown in figure 8, to prompt the user to insert the appropriate type of card and to return the process to step 108 if an inappropriate type of card is inserted.

In step 140, the receiver/decoder 2020 prompts the user using the television 2022 to insert the appropriate PIN code via the remote controller 2026 for the card which has been inserted into the card reader 4036.

Then, in step 148, the receiver/decoder 2020 causes its modem to dial the telephone number contained in the downloaded data, and in step 150 a PSTN connection is made with the communications server 3022. In step 152, the receiver/decoder 2020 sends a product order in the form of the smartcard number for the user's smartcard which is inserted in the other card rcader 4036, the reference data of the product being ordered, the type of payment, that is credit card or direct debit and including an identification of the credit card account or bank account read from the credit card or bank card in step 138 or 136, and the PIN code entered by the user in step 140.

In step 154, the receiver/decoder 2020 waits for a response from the communications server 3022, which may be an error message or an order acknowledgment including the reference data and the actual cost. Whichever type of response is received, it is displayed on the television 2022 in step 156. The receiver/decoder 2020 then receives a disconnect signal from the communications server 3022 in step 158, and then causes its modem to hang up in step 160. The process then returns to step 108.

Referring to the right side of figure 12, the communications server 3022 waits at step 162 for a ringing tone. When received, it makes the PSTN connection 150 mentioned above. The communications server 3022 then receives the product order from the receiver/decoder 2020, as described above with reference to step 152. In step 166, the communications server 3022 checks whether the supplied smartcard number is valid, with reference to the subscriber management system ("SMS") 3004. If invalid, then in step 168, the communications server 3022 sends via the PSTN 12 the error message described with reference to step 154, in step 170 sends the PSTN disconnect signal described with reference to step 158, hangs up its modem in step 172, and then returns to step 162 waiting for another ringing tone.

If the smartcard number is judged to be valid in step 166, then in step 174 the communications server determines with reference to the product management system 98 whether the supplied reference data is valid. If not, then the process proceeds to step 168 described above. However, if the reference data is judged to be valid, then in step 176 the communications server 3022 determines whether the transaction is a C/C transaction or a D/D transaction. If a C/C transaction, then in step 176 the communications server 3022 attempts to debit the user's credit card account with the credit company server 100. If, in step 180, it is determined that the credit card transaction is not successful, then the process proceeds to step 168 described above. However, if the transaction is successful, then the process proceeds to step 182. Also, in step 176, if it is determined that the transaction is a D/D transaction, then the process also proceeds to step 182.

In step 182, the communications server 3022 determines the actual cost of the transaction. This may take into account, for example, discount information for the particular user provided by the SMS 3004. Then, in step 184, the communications server 3022 sends the order acknowledgment described above with reference to step 154. (In figure 12, step 182 is shown as taking place after step 180 or 176. Alternatively, or more preferably, step 182 may take place immediately before step 176, or immediately after step 178 and immediately after step 176.)

After step 184, in step 186 the communications server 3022 sends the PSTN disconnect signal described above with reference to step 158 and then causes its modem to hang up in step 188. Then, the communications server 3022 places the order via the SMS 3004 with the product sales system 4050S, the SMS 3004 providing additional information to the product sales system 4050S, such as the name, address and delivery instructions for the particular user who has placed the order. The communications server determines in step 192 whether the transaction is a C/C or D/D transaction. If a C/C transaction, then the process proceeds to step 162 to await the next ringing tone. However, if a D/D transaction, before doing this, in step 194, the communications server 3022 sends the details of the bank account to be debited to the product sales system 4050S via the SMS 3004.

Once the product sales system 4050S has received the order, it can then forward the order to an appropriate product supplier 102, and in the case of a D/D transaction it can cause the appropriate bank server 104 to debit the appropriate account.

It will be understood that the present invention has been described above purely by way of example, and modifications of detail can be made within the scope of the invention.

Each feature disclosed in the description, and (where appropriate) the claims and drawings may be provided independently or in any appropriate combination.

In the aforementioned preferred embodiments, certain features of the present invention have been implemented using computer software. However, it will of course be clear to the skilled man that any of these features may be implemented using hardware. Furthermore, it will be readily understood that the functions performed by the hardware, the computer software, and such like are performed on or using electrical and like signals.

## Claims

1. Apparatus for transmitting data to a receiver/decoder; said apparatus comprising:
first transmitting means (2004, 2008, 4050S) for transmitting first type visual and/or audio data to the receiver/decoder (2020); and
second transmitting means (2004, 2008, 4006) for transmitting second type data, particular such second type data being associated with particular such first type visual and/or audio data, to enable the receiver/decoder (2020) to generate further visual and/or audio data in dependence on the second type data;
**characterised in that** the first transmitting means (2004, 2008, 4050S) is arranged to transmit to the second transmitting means (2004, 2008, 4006) reference data in response to which said second transmitting means is arranged to transmit said second type data so that said particular first type visual and/or audio data and particular second type data have a predetermined timing relationship, particular such second type data being transmitted in response to particular such reference data associated with that second type data.

2. Apparatus according to Claim 1, wherein the first transmitting means (2004, 2008, 4050S) is arranged to transmit the reference data to the second transmitting means (2004, 2008, 4006) in the blanking interval of the first type visual and/or audio data.

3. Apparatus according to Claim 2, wherein the second transmitting means (2004, 2008, 4006) comprises means (5016) for extracting the reference data from the blanking interval ofthe first type visual and/or audio data.

4. Apparatus according to any of Claims 1 to 3, wherein the first transmitting means (2004, 2008, 4050S) is arranged to transmit with the reference data a time at which the transmission of said associated particular second type data is to commence.

5. Apparatus according to any of Claims 1 to 3, wherein the first transmitting means (2004, 2008, 4050S) is arranged to transmit to the second transmitting means (2004, 2008, 4006) a playlist comprising the reference data and a time at which the transmission of the second type data is to commence.

6. Apparatus according to Claim 5, wherein the playlist comprises a set of reference data and times at which the transmission of said associated particular second type data are to commence.

7. Apparatus according to Claim 5 or 6, wherein the first transmitting means (2004, 2008, 4050S) is arranged continuously to update the playlist.

8. Apparatus according to any of Claims 1 to 7, further comprising a store connected to the second transmitting means (2004, 2008, 4006) for storing said second type data.

9. Apparatus according to Claim 8, wherein the first transmitting means (2004, 2008, 4050S) is arranged to transmit said second type data to said store.

10. Apparatus according to any of Claims 1 to 9, further comprising:
means (5004, 5012) for providing two clock signals, the first and second transmitting means being arranged to transmit the first type visual and/or audio data and the second type data at times determined by respective ones of the clock signals;
means (5000; 5008) for comparing the two clock signals; and
means (5000; 5008) for adjusting at least one of the times according to the result of the comparison.

11. Apparatus according to Claim 10, wherein at least one of the clock signals forms part of its respective type data.

12. Apparatus according to Claim 10 or 11, wherein the first transmitting means (2004, 2008, 4050S) are arranged such that particular first type data are transmitted at a plurality of times, and further comprising means (4050S) for generating a playlist of the times at which the particular first type data are to be transmitted.

13. Apparatus according to Claim 12, wherein the adjusting means (5008) is arranged to adjust the times on the playlist according to the result ofthe comparison.

14. Apparatus according to any of Claims 10 to 13, wherein the adjusting means (5008) is arranged to adjust at the second transmitting means (2004, 2008, 4006) a time at which the transmission of the second type data is to commence so that the first type visual and/or audio data and the second type data are transmitted with said predetermined timing relationship.

15. Apparatus according to any preceding claim, wherein the respective start times for transmission ofthe first and second type data have the predetermined timing relationship.

16. Apparatus according to Claim 15, wherein the respective start times are the same.

17. Apparatus according to any preceding claim, wherein said first type data are a product advertisement, and said second type data are associated with the product being advertised.

18. A transmitting and receiving system, comprising apparatus for transmitting data according to any of Claims 1 to 17 and a receiver/decoder (2020) comprising means for receiving the first and second type data, and means for generating said further visual and/or audio data in dependence on the second data.

19. A method of transmitting data to a receiver/decoder; said method comprising, at first transmitting means (2004, 2008, 4050S), the steps of:
transmitting first type visual and/or audio data to the receiver/decoder (2020); and
transmitting to second transmitting means (2004, 2008, 4006) reference data; said method being **characterised by** the step, at the second transmitting means (2004, 2008, 4006), of:
transmitting in response to particular reference data particular second type data associated with that particular reference data, particular such second type data being associated with particular such first type visual and/or audio data, so that particular first type visual and/or audio data and particular second type data have a predetermined timing relationship, said second type data enabling the receiver/decoder (2020) to generate further visual and/or audio data in dependence on the second type data.

20. A method according to Claim 19, wherein the reference data is transmitted to the second transmitting means (2004, 2008, 4006) in the blanking interval of the first type visual and/or audio data.

21. A method according to Claim 20, wherein the second transmitting means (2004, 2008, 4006) extracts the reference data from the blanking interval ofthe first type visual and/or audio data.

22. A method according to any of Claims 19 to 21, wherein a time at which the transmission of said associated particular second type data is to commence is transmitted with the reference data to the second transmitting means (2004, 2008, 4006).

23. A method according to any of Claims 19 to 22, wherein the reference data and a time at which the transmission ofthe second type data is to commence are transmitted to the second transmitting means (2004, 2008, 4006) in a playlist.

24. A method according to Claim 23, wherein the playlist comprises a set of reference data and times at which the transmission of said associated particular second type data are to commence.

25. A method according to Claim 23 or 24, wherein the playlist is continuously updated.

26. A method according to any of Claims 19 to 25, wherein the second type data is stored in a store (98) connected to the second transmitting means (2004, 2008, 4006).

27. A method according to Claim 26, wherein the second type data is transmitted to the store (98) by the first transmitting means (2004, 2008, 4050S).

28. A method according to any of Claims 19 to 27, wherein:
two clock signals are provided;
the first type visual and/or audio data and the second type data are transmitted at times determined by respective ones of the clock signals;
the two clock signals are compared; and
at least one ofthe times is adjusted according to the result of the comparison.

29. A method according to Claim 28, wherein at least one ofthe clock signals forms part of its respective type data.

30. A method according to Claim 28 or 29, wherein particular first type data are transmitted at a plurality of times, and a playlist of the times at which the particular first type data are to be transmitted is generated by the first transmitting means (2004, 2008, 4050S).

31. A method according to Claim 30, wherein the times on the playlist are adjusted according to the result ofthe comparison.

32. A method according to any of Claims 28 to 31, wherein a time at which the transmission of the second type data is to commence is adjusted at the second transmitting means (2004, 2008, 4006) so that the first type visual and/or audio data and the second type data have the predetermined timing relationship.

33. A method according to any of Claims 19 to 32, wherein the respective start times for transmission of the first and second type data have the predetermined timing relationship.

34. A method according to Claim 33, wherein the respective start times are the same.

35. A method according to any of Claims 19 to 34, wherein the first type data represent a product advertisement and the second type data are associated with the product being advertised.

36. A method according to any of Claims 19 to 35, being further a method of receiving said data, further comprising receiving the first type visual and/or audio data and the second type data at the receiver/decoder (2020), and generating said further visual and/or audio data in dependence on the second type data.

## Patentansprüche

1. Vorrichtung zur Sendung bzw. Übertragung von Daten zu einem Empfänger/Decoder; wobei die Vorrichtung umfasst: ein erstes Sende- bzw. Übertragungsmittel (2004, 2008, 4050S) zum Senden bzw. Übertragen von visuellen und/oder Audio-Daten des ersten Typs zu dem Empfänger/Decoder (2020); und
ein zweites Sende- bzw. Übertragungsmittel (2004, 2008, 4006) zum Senden bzw. Übertragen von Daten des zweiten Typs, wobei besondere solche Daten des zweiten Typs mit besonderen solchen visuellen und/oder Audio-Daten des ersten Typs verbunden bzw. verknüpft sind, um es dem Empfänger/Decoder (2020) zu ermöglichen, weitere visuelle und/oder Audio-Daten in Abhängigkeit von den Daten des zweiten Typs zu generieren; **dadurch gekennzeichnet, dass** das erste Sende- bzw. Übertragungsmittel (2004, 2008, 4050S) angeordnet ist, um zu dem zweiten Sende- bzw. Übertragungsmittel (2004, 2008, 4006) Referenzdaten zu senden bzw. übertragen, in Antwort auf die das zweite Sende- bzw. Übertragungsmittel angeordnet ist, die Daten des zweiten Typs zu senden bzw. übertragen, so dass die besonderen visuellen und/oder Audio-Daten des ersten Typs und besondere Daten des zweiten Typs eine vorbestimmte, Zeitablauf-Beziehung haben, wobei besondere solche Daten des zweiten Typs in Antwort auf besonders solche Referenzdaten, die mit den Daten des zweiten Typs verbunden sind bzw. in Zusammenhang stehen, gesendet bzw. übertragen werden.

2. Vorrichtung nach Anspruch 1, bei welcher das erste Sende- bzw. Übertragungsmittel (2004, 2008, 4050S) angeordnet ist, um die Referenzdaten zu dem zweiten Sende- bzw. Übertragungsmittel (2004, 2008, 4006) in dem Austastintervall den visuellen und/oder Audio-Daten des ersten Typs, zu senden bzw. zu übertragen.

3. Vorrichtung nach Anspruch 2, bei welcher das zweite Sende- bzw. Übertragungsmittel (2004, 2008, 4006), das Mittel (5016) zum Entnehmen bzw. Ausblenden der Referenzdaten von dem Austastintervall der visuellen und/oder Audio-Daten des ersten Typs, umfasst.

4. Vorrichtung nach irgendeinem Anspruch 1 bis 3, bei welcher das erste Sende- bzw. Übertragungsmittel (2004, 2008, 4050S) angeordnet ist, um mit den Referenzdaten eine Zeit, zu der die Sendung bzw. Übertragung der verbundenen bzw. verknüpften besonderen Daten des zweiten Typs begonnen hat, zu senden bzw. übertragen.

5. Vorrichtung nach irgendeinem Anspruch 1 bis 3, bei welcher das Sende- bzw. Übertragungsmittel (2004, 2008, 4050S) angeordnet ist, um zu dem zweiten Sende- bzw. Übertragungsmittel (2004, 2008, 4006) eine Wiedergabe- bzw. Spielliste zu senden bzw. zu übertragen, umfassend die Referenzdaten und eine Zeit, bei welcher die Sendung bzw. Übertragung der Daten des zweiten Typs beginnen soll.

6. Vorrichtung nach Anspruch 5, bei welcher die Wiedergabe- bzw. Spielliste eine Reihe von Referenzdaten und Zeiten, bei welcher die Sendung bzw. Übertragung der verbundenen bzw. verknüpften besonderen Daten des zweiten Typs beginnen sollen.

7. Vorrichtung nach Anspruch 5 oder 6, bei welcher das erste Sende- bzw. Übertragungsmittel (2004, 2008, 4050S) angeordnet ist, um die Wiedergabe- bzw. Spielliste kontinuierlich zu aktualisieren.

8. Vorrichtung nach irgendeinem Anspruch 1 bis 7, weiter umfassend einen Speicher, der mit dem zweiten Sende- bzw. Übertragungsmittel (2004, 2008, 4006) zur Speicherung der Daten des zweiten Typs, verbunden ist.

9. Vorrichtung nach Anspruch 8, bei welcher das erste Sende- bzw. Übertragungsmittel (2004, 2008, 4050S) angeordnet ist, um die Daten des zweiten Typs zu dem Speicher zu senden bzw. zu übertragen.

10. Vorrichtung nach irgendeinem Anspruch 1 bis 9, weiter umfassend: Mittel (5004, 5012), um zwei Taktsignale bereitzustellen, wobei das erste und zweite Sende- bzw. Übertragungsmittel angeordnet sind, um visuelle und/oder Audio-Daten des ersten Typs und die Daten des zweiten Typs zu Zeiten zu übertragen, die durch entsprechende von Taktsignalen bestimmt sind;
Mittel (5000, 5008) zum Vergleichen der zwei Taktsignale; und
Mittel (5000, 5008) zur Justierung von zumindest einer von den Zeiten entsprechend dem Ergebnis des Vergleichs.

11. Vorrichtung nach Anspruch 10, bei welcher zumindest eins von den Taktsignalen ein Teil von ihrem entsprechenden Daten-Typ formt bzw. bildet.

12. Vorrichtung nach Anspruch 10 oder 11, bei welcher das erste Sende- bzw. Übertragungsmittel (2004, 2008, 4050S) angeordnet ist, so dass besondere Daten des ersten Typs zu einer Vielzahl von Zeiten gesendet bzw. übertragen werden, und weiter umfassend Mittel (4050S) zum Generieren einer Wiedergabe- bzw. Spielliste von den Zeiten, zu denen die besonderen Daten des ersten Typs zu senden bzw. zu übertragen sind.

13. Vorrichtung nach Anspruch 12, bei welcher die justierenden bzw. regulierenden Mittel (5008) angeordnet sind, um die Zeiten auf der Wiedergabe- bzw. Spielliste entsprechend dem Ergebnis des Vergleichs zu justieren bzw. abzugleichen.

14. Vorrichtung nach irgendeinem Anspruch 10 bis 13, bei welcher das justierende bzw. regulierende Mittel (5008) angeordnet ist, um bei dem zweiten Sende- bzw. Übertragungsmittel (2004, 2008, 4006) eine Zeit, zu der die Sendung bzw. Übertragung von den Daten des zweiten Typs beginnen soll, zu justieren bzw. abzugleichen, so dass die visuellen und/oder Audio-Daten des ersten Typs und die Daten des zweiten Typs mit der genannten vorbestimmten, Zeitablauf-Beziehung gesendet bzw. übertragen werden.

15. Vorrichtung nach irgendeinem vorherigen Anspruch, bei welcher die entsprechenden Startzeiten für die Sendung bzw. Übertragung von den Daten des ersten und zweiten Typs die vorbestimmte Zeitablauf-Beziehung haben.

16. Vorrichtung nach Anspruch *15,* bei welcher die entsprechenden Startzeiten die selben sind.

17. Vorrichtung nach irgendeinem vorherigen Anspruch, bei welcher die Daten des ersten Typs eine Produktwerbung bzw. Annonce sind, und die Daten des zweiten Typs mit dem Produkt, das beworben wird, verbunden bzw. verknüpft sind.

18. Ein Sendungs- bzw. Übertragungs- und Empfangssystem, umfassend eine Vorrichtung zur Sendung bzw. Übertragung von Daten entsprechend irgendeinem von den Ansprüchen 1 bis 17 und einem Empfänger/Decoder (2020) der Mittel zum Empfang der Daten des ersten und zweiten Typs, und Mittel zum Generieren der weiteren visuellen und/oder Audio-Daten, in Abhängigkeit von den zweiten Daten umfasst.

19. Verfahren zur Sendung bzw. zur Übertragung von Daten zu einem Empfänger/Decoder; wobei das Verfahren bei einem ersten Sende- bzw. Übertragungsmittel (2004, 2008, 4050S) die folgenden Schritte umfasst:
die Sendung bzw. Übertragung der visuellen und/oder Audio-Daten des ersten Typs zu dem Empfänger/Decoder (2020); und
die Sendung bzw. Übertragung der Referenzdaten zu dem zweiten Sende- bzw. Übertragungsmittel (2004, 2008, 4006); wobei das Verfahren durch folgenden Schritt bei dem zweiten Sende- bzw. Übertragungsmittel (2004, 2008, 4006) **gekennzeichnet** ist:
Sendung bzw. Übertragung in Antwort auf die besonderen Referenzdaten besondere Daten des zweiten Typs, die mit den besonderen Referenzdaten in Verbindung stehen, wobei besondere solche Daten des zweiten Typs mit besonderen solchen visuellen und/oder Audio-Daten des ersten Typs in Verbindung stehen, so dass besondere visuelle und/oder Audio-Daten des ersten Typs und besondere Daten des zweiten Typs eine vorbestimmte Zeitablauf-Beziehung aufweisen, wobei die Daten des zweiten Typs den Empfänger/Decoder (2020) in die Lage versetzen, weiter visuelle und/oder Audio-Daten in Abhängigkeit von den Daten des zweiten Typs zu erzeugen.

20. Verfahren nach Anspruch 19, bei welchem die Referenzdaten zu dem zweiten Sende- bzw. Übertragungsmittel (2004, 2008, 4006) in dem Austastintervall der visuellen und/oder Audio-Daten des ersten Typs gesendet bzw. übertragen werden.

21. Verfahren nach Anspruch 20, bei welchem die zweiten Sende- bzw. Übertragungsmittel (2004, 2008, 4006) die Referenzdaten von dem Austastintervall von den visuellen und/oder Audio-Daten des ersten Typs extrahiert.

22. Verfahren nach irgendeinem Anspruch 19 bis 21, bei welchem eine Zeit, bei welcher die Sendung bzw. Übertragung der zugeordneten bzw. verbundenen besonderen Daten des zweiten Typs beginnen bzw. anfangen soll, mit den Referenzdaten zu dem zweiten Sende- bzw. Übertragungsmittel (2004, 2008, 4006) gesendet bzw. übertragen wird.

23. Verfahren nach irgendeinem Anspruch 19 bis 22, bei welchem die Referenzdaten und eine Zeit, zu der die Sendung bzw. Übertragung der Daten des zweiten Typs beginnen bzw. anfangen soll, zu dem zweiten Sende- bzw. Übertragungsmittel (2004, 2008, 4006) in eine Wiedergabe- bzw. Spielliste gesendet bzw. übertragen werden.

24. Verfahren nach Anspruch 23, bei welchem die Wiedergabe- bzw. Spielliste eine Reihe von Referenzdaten und Zeiten, zu denen die Sendung bzw. Übertragung von den zugeordneten bzw. verbundenen besonderen Daten des zweiten Typs beginnen bzw. anfangen soll, umfasst.

25. Verfahren nach Anspruch 23 oder 24, bei welchem die Wiedergabe- bzw. Spielliste kontinuierlich aktualisiert wird.

26. Verfahren nach irgendeinem Anspruch 19 bis 25, bei welchem die Daten des zweiten Typs in einem Speicher (98), der mit dem zweiten Sende- bzw. Übertragungsmittel (2004, 2008, 4006) verbunden ist, gespeichert werden.

27. Verfahren nach Anspruch 26, bei welchem die Daten des zweiten Typs zu dem Speicher (98) durch das erste Sende- bzw. Übertragungsmittel (2004, 2008, 4050S) gesendet bzw. übertragen werden.

28. Verfahren nach irgendeinem Anspruch 19 bis 27, bei welchem:
zwei Taktsignale zur Verfügung gestellt werden;
die visuellen und/oder Audio-Daten des ersten Typs und die Daten des zweiten Typs zu vorbestimmten Zeiten durch entsprechende von den Taktsignalen gesendet bzw. übertragen werden;
die zwei Taktsignale verglichen werden; und
zumindest eine der Zeiten entsprechend dem Ergebnis des Vergleichs justiert bzw. abgeglichen wird.

29. Verfahren nach Anspruch 28, bei welchem zumindest eines der Taktsignale einen Teil von seinem entsprechenden Datentyp bildet bzw, formt.

30. Verfahren nach Anspruch 28 oder 29, bei welchem besondere Daten des ersten Typs zu einer Vielzahl von Zeiten gesendet bzw. übertragen werden, und eine Wiedergabe- bzw. Spielliste von den Zeiten, zu denen die besonderen Daten des ersten Typs, die zu übertragen sind, durch das erste Sende- bzw. Übertragungsmittel (2004, 2008, 4050S) erzeugt wird.

31. Verfahren nach Anspruch 30, bei welchem die Zeiten auf der Wiedergabe- bzw. Spielliste entsprechend dem Ergebnis des Vergleichs eingestellt werden.

32. Verfahren nach irgendeinem Anspruch 28 bis 31, bei welchem eine Zeit, zu der die Sendung bzw. Übertragung von Daten des zweiten Typs beginnen bzw. anfangen soll, bei dem zweiten Sende- bzw. Übertragungsmittel (2004, 2008, 4006) eingestellt wird, so dass die visuellen und/oder Audio-Daten des ersten Typs und die Daten des zweiten Typs eine vorbestimmte Zeitablauf-Beziehung haben.

33. Verfahren nach irgendeinem Anspruch 19 bis 32, bei welchem die jeweiligen Startzeiten zur Sendung bzw. Übertragung der Daten des ersten Typs und des zweiten Typs eine vorbestimmte Zeitablauf-Beziehung haben.

34. Verfahren nach Anspruch 33, bei welchem die jeweiligen Startzeiten die selben sind.

35. Verfahren nach irgendeinem Anspruch 19 bis 34, bei welchem die Daten des ersten Typs eine Produktwerbung bzw. Annonce repräsentieren und die Daten des zweiten Typs mit dem Produkt, das beworben wird, verbunden sind.

36. Verfahren nach irgendeinem Anspruch 19 bis 35, das weiter ein Verfahren zum Empfang der Daten ist, weiter umfassend den Empfang der visuellen und/oder Audio-Daten des ersten Typs und der Daten des zweiten Typs bei dem Empfänger/Decoder (2020) und die Erzeugung der weiteren visuellen und/oder Audio-Daten in Abhängigkeit von den Daten des zweiten Typs.

## Revendications

1. Dispositif servant à transmettre des données à un récepteur / décodeur ; ledit dispositif (100) comprenant :
des premiers moyens de transmission (2004, 2008, 4050S) destinés à transmettre un premier type de données visuelles et/ou audio au récepteur / décodeur (2020) ; et
des seconds moyens de transmission (2004, 2008, 4006) destinés à transmettre un second type de données, ce second type de données particulières étant associé au dit premier type de données visuelles et/ou audio particulières, pour permettre au récepteur / décodeur (2020) de générer d'autres données visuelles et/ou audio en fonction du second type de données ;
**caractérisé en ce que** les premiers moyens de transmission (2004, 2008, 4050S) sont configurés de manière à transmettre aux seconds moyens de transmission (2004, 2008, 4006) des données de référence en réponse à quoi lesdits seconds moyens de transmission sont configurés de manière à transmettre ledit second type de données de telle sorte que ledit premier type de données visuelles et/ou audio particulières et ledit second type de données particulières se trouvent dans une relation de synchronisation prédéterminée, ledit second type de données particulières étant transmis en réponse aux dites données de référence particulières associées à ce second type de données.

2. Dispositif selon la revendication 1, dans lequel les premiers moyens de transmission (2004, 2008, 4050S) sont configurés de manière à transmettre les données de référence aux seconds moyens de transmission (2004, 2408, 4006) au cours de l'intervalle de suppression du premier type de données visuelles et/ou audio.

3. Dispositif selon la revendication 2, dans lequel les seconds moyens de transmission (2004, 2008, 4006) comprennent des moyens (5016) servant à extraire les données de référence à partir de l'intervalle de suppression du premier type de données visuelles et/ou audio.

4. Dispositif selon l'une quelconque des revendications 1 à 3, dans lequel les premiers moyens de transmission (2004, 2008, 4050S) sont configurés de manière à transmettre avec les données de référence une heure à laquelle la transmission dudit second type de données particulières associées doit commencer.

5. Dispositif selon l'une quelconque des revendications 1 à 3, dans lequel les premiers moyens de transmission (2004, 2008, 4050S) sont configurés de manière à transmettre aux seconds moyens de transmission (2004, 2008, 4006) une liste d'écoute comprenant les données de référence et une heure à laquelle la transmission du second type de données doit commencer.

6. Dispositif selon la revendication 5, dans lequel la liste d'écoute comprend un ensemble de données de référence et d'heures auxquelles la transmission dudit second type de données particulières associées doit commencer.

7. Dispositif selon la revendication 5 ou 6, dans lequel les premiers moyens de transmission (2004, 2008, 4050S) sont configurés de manière à mettre continuellement à jour la liste d'écoute.

8. Dispositif selon l'une quelconque des revendications 1 à 7, comprenant en outre une mémoire connectée aux seconds moyens de transmission (2004, 2008, 4006) servant à stocker ledit second type de données.

9. Dispositif selon la revendication 8, dans lequel les premiers moyens de transmission (2004, 2008, 40505) sont configurés de manière à transmettre ledit second type de données dans ladite mémoire.

10. Dispositif selon l'une quelconque des revendications 1 à 9, comprenant en outre :
des moyens (5004, 5012) destinés à fournir deux signaux d'horloge, les premiers et les seconds moyens de transmission étant configurés de manière à transmettre le premier type de données visuelles et/ou audio et le second type de données à des heures données déterminées par celles respectives des signaux d'horloge ;
des moyens (5000, 5008) destinés à comparer les deux signaux d'horloge ; et
des moyens (5000, 5008) destinés à régler au moins une des heures en fonction du résultat de la comparaison.

11. Dispositif selon la revendication 10, dans lequel au moins un des signaux d'horloge fait partie de son type de données respectif.

12. Dispositif selon la revendication 10 ou 11, dans lequel les premiers moyens de transmission (2004, 2008, 4050S) sont configurés de telle sorte que le premier type de données particulières soit transmis à une pluralité d'heures données, et comprenant en outre des moyens (4050S) destinés à générer une liste d'écoute des heures auxquelles le premier type de données particulières doit être transmis.

13. Dispositif selon la revendication 12, dans lequel les moyens de réglage (5008) sont configurés de manière à régler les heures sur la liste d'écoute en fonction du résultat de la comparaison.

14. Dispositif selon l'une quelconque des revendications 10 à 13, dans lequel les moyens de réglage (5008) sont configurés de manière à régler au niveau des seconds moyens de transmission (2004, 2008, 4006) une heure à laquelle la transmission du second type de données doit commencer de telle sorte que le premier type de données visuelles et/ou audio et le second type de données soient transmis avec ladite relation de synchronisation prédéterminée.

15. Dispositif selon l'une quelconque des revendications précédentes, dans lequel les heures respectives de début de la transmission du premier et du second type de données se trouvent dans la relation de synchronisation prédéterminée.

16. Dispositif selon la revendication 15, dans lequel les heures respectives de début de la transmission sont les mêmes.

17. Dispositif selon l'une quelconque des revendications précédentes, dans lequel ledit premier type les données correspond à un message publicitaire pour un produit, et ledit second type de données est associé au produit qui est annoncé.

18. Système de transmission et de réception, comprenant le dispositif servant à transmettre les données selon l'une quelconque des revendications 1 à 17 et un récepteur / décodeur (2020) comprenant des moyens permettant de recevoir le premier et le second type de données, et des moyens permettant de générer en outre lesdites premières données visuelles et/ou audio en fonction du second type de données.

19. Procédé servant à transmettre des données à un récepteur / décodeur ; ledit procédé comprenant, au niveau des premiers moyens de transmission (2004, 2008, 4050S), les étapes consistant à :
transmettre un premier type de données visuelles et/ou audio au récepteur / décodeur(2020) ; et
transmettre aux seconds moyens de transmission (2004, 2008, 4006) les données de référence ; ledit procédé étant **caractérisé,** au niveau des seconds moyens de transmission (2004, 2008, 4006), par l'étape consistant à :
transmettre en réponse à des données de référence particulières un second type de données particulières associées avec ces données de référence particulières, ledit second type de données particulières étant associé avec ce premier type de données visuelles et/ou audio particulières, de telle sorte que ce premier type de données visuelles et/ou audio particulières et ce second type de données particulières se trouvent dans une relation de synchronisation prédéterminée, ledit second type de données permettant au récepteur /-décodeur (2020) de générer d'autres données visuelles et/ou audio en fonction du second type de données.

20. Procédé selon la revendication 19, dans lequel les données de référence sont transmises aux seconds moyens de transmission (2004, 2008, 4006) au cours de l'intervalle de suppression du premier type de données visuelles et/ou audio.

21. Procédé selon la revendication 20, dans lequel les seconds moyens de transmission (2004, 2008, 4006) extraient les données de référence à partir de l'intervalle de suppression du premier type de données visuelles et/ou audio.

22. Procédé selon l'une quelconque des revendications 19 à 21, dans lequel une heure à laquelle la transmission dudit second type de données particulières associées doit commencer est transmise avec les données de référence aux seconds moyens de transmission (2004, 2008, 4006).

23. Procédé selon l'une quelconque des revendications 19 à 22, dans lequel les données de référence et une heure à laquelle la transmission du second type de données doit commencer sont transmises aux seconds moyens de transmission (2004, 2008, 4006) dans une liste d'écoute.

24. Procédé selon la revendication 23, dans lequel la liste d'écoute comprend un ensemble de données de référence et d'heures auxquelles la transmission dudit second type de données particulières associées doit commencer.

25. Procédé selon la revendication 23 ou 24, dans lequel la liste d'écoute est mise à jour en permanence.

26. Procédé selon l'une quelconque des revendications 19 à 25, dans lequel le second type de données est enregistré dans une mémoire (98) connectée aux seconds moyens de transmission (2004, 2008, 4006).

27. Procédé selon la revendication 26, dans lequel le second type de données est transmis à la mémoire (98) par les premiers moyens de transmission (2004, 2008, 4050S).

28. Procédé selon l'une quelconque des revendications 19 à 27, dans lequel :
deux signaux d'horloge sont procurés ;
le premier type de données visuelles et/ou audio et le second type de données sont transmis à des heures déterminées par celles respectives des signaux d'horloge ;
les deux signaux d'horloge sont comparés ; et
au moins une des heures est réglée en fonction du résultat de la comparaison.

29. Procédé selon la revendication 28, dans lequel au moins un des signaux d'horloge fait partie de son type de données respectif.

30. Procédé selon la revendication 28 ou 29, dans lequel le premier type de données particulières est transmis à une pluralité d'heures données, et dans lequel une liste d'écoute des heures auxquelles le premier type de données particulières doit être transmis est générée par les premiers moyens de transmission (2004, 2008, 4050S).

31. Procédé selon la revendication 30, dans lequel les heures de la liste d'écoute sont réglées en fonction du résultat de la comparaison.

32. Procédé selon l'une quelconque des revendications 28 à 31, dans lequel une heure à laquelle la transmission du second type de données doit commencer est réglée au niveau des seconds moyens de transmission (2004, 2008, 4006) de telle sorte que le premier type de données visuelles et/ou audio et le second type de données se trouvent dans une relation de synchronisation prédéterminée.

33. Procédé selon l'une quelconque des revendications 19 à 32, dans lequel les heures respectives de début de la transmission du premier et du second types de données se trouvent dans une relation de synchronisation prédéterminée.

34. Procédé selon la revendication 33, dans lequel les heures respectives de début de la transmission sont les mêmes.

35. Procédé selon l'une quelconque des revendications 19 à 34, dans lequel le premier type les données correspond à un message publicitaire pour un produit, et le second type de données est associé au produit qui est annoncé.

36. Procédé selon l'une quelconque des revendications 19 à 35, qui est en outre un procédé permettant de recevoir lesdites données, comprenant en outre la réception du premier type de données visuelles et/ou audio et du second type de données au niveau du récepteur / décodeur (2020), et générant lesdites autres données visuelles et/ou audio en fonction du second type de données.
